Europäisches Patentamt

European Patent Office

Office européen des brevets

(19)

(11) Veröffentlichungsnummer: **0 111 134
B1**

(12) # EUROPÄISCHE PATENTSCHRIFT

(45) Veröffentlichungstag der Patentschrift:
09.04.86

(51) Int. Cl.⁴: **A 61 C 8/00**

(21) Anmeldenummer: 83110731.3

(22) Anmeldetag: 27.10.83

(54) **Schraubenförmig ausgebildetes Kieferimplantat.**

(30) Priorität: **12.11.82 DE 3241963**

(43) Veröffentlichungstag der Anmeldung:
**20.06.84 Patentblatt 84/25**

(45) Bekanntmachung des Hinweises auf die Patenterteilung:
**09.04.86 Patentblatt 86/15**

(84) Benannte Vertragsstaaten:
**AT BE CH FR GB IT LI NL SE**

(56) Entgegenhaltungen:
**EP - A - 0 050 591
DE - A - 2 600 639
DE - A - 2 717 506
DE - A - 3 043 336
DE - U - 8 016 152**

(73) Patentinhaber: **Feldmühle Aktiengesellschaft,
Fritz-Vomfelde-Platz 4, D-4000 Düsseldorf 11 (DE)**

(72) Erfinder: **Münch, Manfred, Dr. med. dent., Schillerplatz 3,
D-7440 Nürtingen (DE)**

(74) Vertreter: **Uhlmann, Hans, Dr. rer.nat., Dipl.-Chem.,
Gladbacher Strasse 189, D-4060 Viersen 1 (DE)**

**Beschreibung**

Die vorliegende Erfindung betrifft ein Kieferimplantat aus keramischem Werkstoff, das an seinem unteren, zur Verankerung im Kieferknochen vorgesehenen Teil als konische, an ihrem Ende abgerundete Schraube ausgebildet ist, an seinem Oberteil eine Hohlkehle zur Anlagerung der Epithelmanschette und eine Öffnung zur Aufnahme eines Zahnträgers aufweist.

Schraubenförmige Kieferimplantate, die an ihrem oberen Ende einen Zahnträger zur Aufnahme eines künstlichen Zahnes aufweisen, sind seit längerem bekannt. In der DE-A 26 00 639 wird ein Einsatz beschrieben, der sofort nach dem Ziehen eines Zahnes im Kieferknochen einzusetzen ist. Das beschriebene Einsatzteil hat eine konisch zulaufende Form und ist an seinem Bodenteil abgerundet. Der Nachteil dieses Vorschlages liegt darin, daß die beinahe kreisförmige Abrundung des Schraubenganges keinen Widerstand gegen eine Abstoßung des Kieferimplantates bildet. Ein weiterer Nachteil des in der DE-A 26 00 639 gezeigten Implantates besteht in seinem einphasigen Aufbau, d.h. der im Kiefer zu verankernde Teil und der eigentliche Zahnersatzträger sind aus einem Stück hergestellt. Der Nachteil eines solchen einphasigen Implantates besteht darin, daß der Einheilungsprozeß deswegen nicht ungestört erfolgen kann, weil der aus dem Kieferkamm herausragende Zahnersatzträger ein Hindernis für die instinktiv ausgeführten Zungenbewegungen bildet, wodurch immer wieder, wenn auch minimale Verschiebungen des eingesetzten Implantates erfolgen, die den Einheilungsprozeß empfindlich stören.

Ein weiterer in der DE-A 30 43 336 enthaltener Vorschlag sieht bei einem ggf. aus keramischem Werkstoff hergestellten Implantat, eine konisch ausgebildete Schraube mit einem sägezahnartigen Gewindegang vor, die an ihrem oberen Ende eine Hohlkehle zur Anlagerung der Epithelmanschette aufweist und die an ihrem unteren Ende ebenfalls abgerundet ist. Der in das obere Ende einsetzbare Zahnersatzträger ruht in einem zur Dämpfung der Kaukräfte vorgesehenen Kunststofflager.

Der gemeinsame Nachteil dieser bekannten Kieferimplantate besteht darin, daß die nach der Implantation einsetzende Regeneration und Anlagerung des Knochengewebes, obwohl es den konisch ausgebildeten Schraubenteil umschließt, nicht in jedem Fall eine Lockerung und damit verbundene Abstoßung des Implantates aus dem Kieferknochen verhindern kann. Dieser Nachteil erklärt sich bei dem aus der DE-A 26 00 639 bekannten Implantat daraus, daß die konisch ausgebildete Schraubenform bis an den Zahnträger geführt ist, während gemäß der DE-A 30 43 336 die konische Ausbildung bis an das die Hohlkehle aufweisende Oberteil reicht. Die Implantate sitzen dadurch praktisch in einem Trichter, der nach oben keinen die Implantate

sicher fixierenden Abschluß durch Knochen bzw. Bindegewebe aufweist. Ein weiterer Nachteil des aus der DE-A- 30 43 336 bekannten Implantates ergibt sich aus der Ausbildung des dort gezeigten Sägezahngewindes, bei dem die Flanken des Gewindeganges mit der Mittelachse des Implantates einen in Richtung auf das untere Ende des Implantates offenen Winkel bilden. Diese Art der Gewindeausbildung bezweckt einen abstützenden Effekt, wobei trotz der kaudruckdämpfenden Wirkung des Kunststofflagers für den Zahnersatzträger an den Gewindespitzen der Gewindegänge Spannungsspitzen auftreten, die eine starke Belastung des Knochengewebes zur Folge haben und ggf. ein Lockern des Implantates bewirken. Die Ausbildung des Sägezahngewindes ist dabei nicht geeignet, einem Herausarbeiten des Implantates aus dem Kiefer entgegenzuwirken.

Aus der EP-A-0 050 591 ist auch ein Kieferimplantat bekanntgeworden, bei dem auf einem zylindrisch ausgebildeten Abschnitt sägezahnartig ausgebildete Gewindegänge angeordnet sind, und bei dem die Flanken der Gewindegänge einen in Richtung des Oberteils geöffneten Winkel < 90° bilden. Der zylindrisch ausgebildete, das Gewinde aufweisende Implantatteil schließt direkt an das die Hohlkehle aufweisende Oberteil an, so daß auch hierbei die oben beschriebene Gefahr der Trichterbildung besteht. Nachteilig bei der beschriebenen zylindrischen Gewindeausbildung ist es, daß nur der untere Gewindegang - bei Implantation im Unterkiefer - zur Abstützung des Implantates dient.

Die Aufgabe der vorliegenden Erfindung liegt in der Überwindung der bestehenden Nachteile, insbesondere will die Erfindung ein Kieferimplantat schaffen, das eine wesentlich bessere Verankerung. im Kieferknochen durch das das eingesetzte Implantat umwachsende Knochengewebe ermöglicht. Vornehmlich will die Erfindung ein Implantat zur Verfügung stellen, das die bei den bekannten Implantaten auftretende nachteilige Trichterbildung vermeidet.

Zur Lösung dieser Aufgabe sieht die Erfindung ein Kieferimplantat aus keramischem Werkstoff vor, das an seinem unteren zur Verankerung im Kieferknochen vorgesehenen Teil als konische, an ihrem Ende abgerundete Schraube ausgebildet ist, an seinem Oberteil eine Hohlkehle zur Anlagerung der Epithelmanschette und eine Öffnung zur Aufnahme eines Zahnträgers aufweist und das dadurch gekennzeichnet ist, daß zwischen dem Oberteil und dem als konische Schraube ausgebildeten unteren Teil zumindest ein Ringwulst und zumindest zwei ringförmige Einkerbungen ausgebildet sind, wobei der Durchmesser des Ringwulstes kleiner ist als der Durchmesser der Gewindespitzen beim obersten Gewindegang des unteren Teils des Kieferimplantates.

Durch die Ausbildung von zumindest einem Ringwulst und zumindest zwei ringförmigen Einkerbungen zwischen dem Oberteil und dem als konische Schraube ausgebildeten unteren Teil ermöglicht die vorliegende Erfindung das Einwachsen von Bindegewebsfasern über die Gewindespitzen des obersten Gewindeganges bis unterhalb des eine Hohlkehle aufweisenden Oberteils, wodurch eine Lockerung des Implantates durch Trichterbildung vermieden und ein schneller Einheilungsprozeß gefördert werden. Insbesondere wird durch die unterhalb des Oberteiles ausgebildeten ringförmigen Einkerbungen bzw. einen Ringwulst eine Trichterbildung, wie sie bei den bekannten Kieferimplantaten auftritt, vermieden.

Ein weiterer Vorteil des konisch ausgebildeten schraubenförmigen Implantates mit der erfindungs-gemäßen Ringwulst und den ringförmigen Einkerbungen besteht darin, daß dieses im Gegensatz zuzylindrischen schraubförmigen Implantaten sofortnach der Extraktion eines Zahnes eingesetzt werden kann, während bei den vorgenannten zylindrischen Implantaten nach Extraktion des Zahnes zunächst abgewartet werden muß, bis sich die entstandene Lücke im Kiefer durch neubildenden Knochen bzw. Bindegewebe gefüllt hat und danach eine Bohrung zur Aufnahme der zylindrischen Schraube angebracht wird.

Um eine besonders sichere Verankerung auch bereits während des Einheilungsprozesses zu erzielen, hat sich eine Ausführungsform der vorliegenden Erfindung als besonders vorteilhafterwiesen, die dadurch gekennzeichnet ist, daß der untere Teil des Kieferimplantates Gänge mit, Längsschnitt betrachtet, sägezahnartigem profil aufweist, deren Flanken mit der Mittelachse des Kieferimplantates einen in Richtung des Oberteils geöffneten Winkel $\alpha <$ 90°, bevorzugt von 20 bis 40° bilden.

Diese Gewindeform ermöglicht es, auftretende Zugkräfte weitestgehend abzufangen, während die durch die Kaukräfte auf das Implantat einwirkende Hauptbelastung über die gesamte konische Fläche und die Gewindegänge des Implantates im Sinne eines Kräfteparallelogramms auf den angrenzenden Knochen tangential abgeleitet wird. Dadurch werden Überbelastungen sicher vermieden. Der vorliegenden Erfindung gelingt damit eine Nachstellung des beim natürlichen Zahn vorliegenden prinzips, wie sich in einem histologischen Versuch gezeigt hat, bei dem tangential am Implantat ansetzende Bindegewebsfasern des Zahnhalteapparates nachgewiesen wurden. Sie entsprechen dem Desmodond des natürlichen Zahnes, welches ebenfalls tangential ansitzt.

Um sicherzustellen, daß das erfindungsgemäße Kieferimplantat in der Einheilungsphase nicht durch instinktiv ausgeführte Zungenbewegungen gestört wird, sieht eine ganz besonders bevorzugte Ausführungsform der vorliegenden Erfindung vor, daß die Oberseite des Oberteils aus zwei halbkreisförmigen Flächen besteht, die in einem Winkel von 13 bis 18° seitlich vom Kamm der Oberseite abfallen. Die bekannten Kieferimplantate, insbesondere Kieferimplantate, bei denen der im Kieferknochen zu verankernde Teil und der Zahnersatzträger aus einem Stück bestehen, haben dagegen immer den Nachteil, daß entweder der Zahnträger selbst oder wie im Fall der in der DE-A-30 43 336 oder EP-A-0 050 591 beschriebenen Implantate, die über die Hohlkehle hinausragenden Haltevorrichtungen für die Zahnträger durch instinktiv ausgeführte Zungenbewegungen berührt werden und dadurch der Einheilungsprozeß gestört wird.

Beim Einsetzen des erfindungsgemäßen Implantates wird dabei so verfahren, daß der die beiden halbkreisförmigen Flächen trennende Kamm an der Oberseite des Oberteils, der dem Durchmesser des Oberteils entspricht, im Kieferkamm in mesial/ distaler Richtung ausgerichtet wird, so daß die Halbkreise der beiden Flächen nach bukkal und lingual bzw. palatinal weisen.

Zur Erzielung einer noch weiter verbesserten Verankerung im Kieferkamm hat sich eine Ausführungsform der vorliegenden Erfindung als zweckmäßig erwiesen, die dadurch gekennzeichnet ist, daß am Ringwulst und/oder den ringförmigen Einkerbungen zusätzlich Retentionen ausgebildet sind, weil diese das Einwachsen des Implantats weiter verbessern.

Die nachfolgenden Figuren dienen der näheren Erklärung der Erfindung, ohne daß die Erfindung auf die gezeigten Ausführungsformen beschränkt ist.

Es zeigen:

Figur 1 eine Seitenansicht mit Schnittaufbruch des erfindungsgemäßen Kieferimplantates zusammmen mit einem Zahnersatzträger in noch auseinandergezogener Darstellung.

Figur 2 die Ansicht mit Schnittaufbrüchen von einer anderen Seite entsprechend Richtung II auf Figur 1.

Figur 3 einen Schnitt in der Ebene III-III der Figur 1;

Figur 4 einen Schnitt in der Ebene IV-IV der Figur 1;

Figur 5 einen gegenüber Figur 2 vergrößerten Schnittaufbruch im Bereich V der Figur 2;

Figur 6 einen vergrößerten Schnittaufbruch im Bereich VI der Figur 2;

Figur 7 eine Aufsicht aus der Ebene VII-VII der Figur 2.

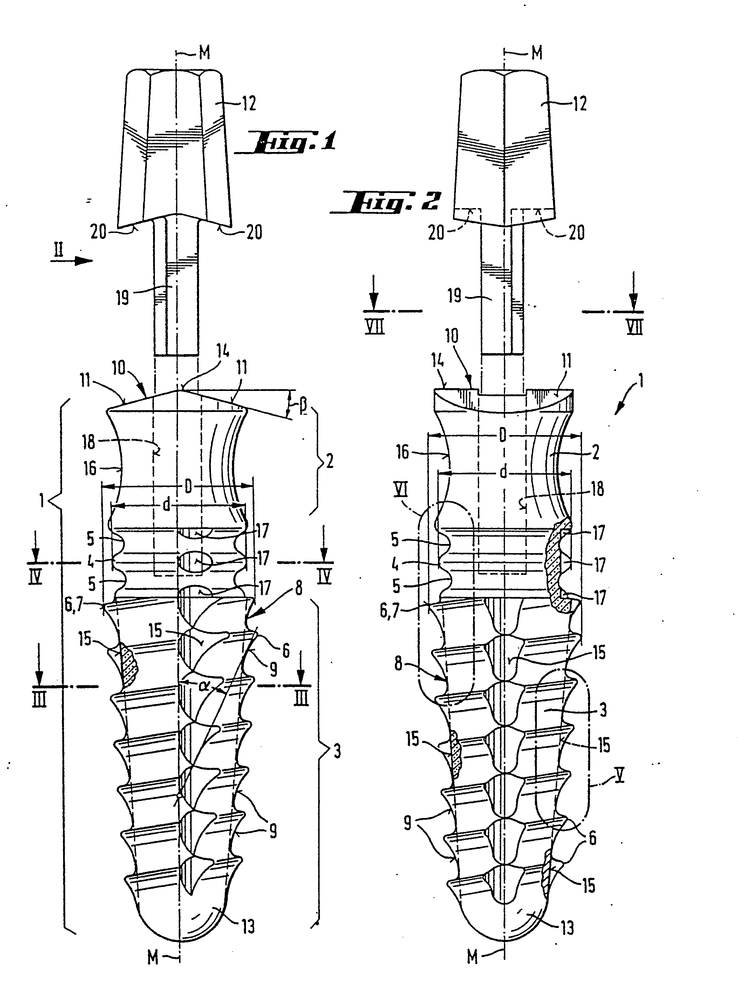

Figur 1 zeigt ein erfindungsgemäßes Kieferimplantat 1 mit einem in seinem unteren Teil 3 abgerundeten Ende 13. Der untere Teil 3 weist in Fig. 5 in vergrößerter Form gezeigte sägezahnartige Gewindegänge 8 auf. Zwischen dem eine Hohlkehle 16 aufweisenden Oberteil 2 und dem unteren Teil 3 befinden sich zwei ringförmige Einkerbungen 5 und ein Ringwulst 4, die zum Überwachsen durch den sich neu bildenden Knochen vorgesehen sind. Die Oberseite 10 des Oberteils 2 wird von zwei halbkreisförmigen Flächen 11 gebildet, die auf einen in einem Winkel $\beta = 15°$ höherliegenden Kamm 14, der dem Durchmesser des Oberteils 2 entspricht, zulaufen. Der Kamm 14 wird beim Einsetzen des Implantates in mesial/distäler Richtung positioniert. Retentionen 17 am Ringwulst 4 und den ringförmigen Einkerbungen 5 dienen einer weiter verbesserten Verankerung. Der Durchmesser d des Ringwulstes 4 des Kieferimplantates 1 ist erfindungs-gemäß kleiner als der Durchmesser D des obersten Gewindeganges 7 des konisch ausgebildeten schraubenförmigen Unterteils 3, gemessen an den Gewindespitzen 6 des obersten Gewindeganges 7. Mit y ist die Konizität des Gewindes 6,8,9 bezeichnet.

In Fig. 2 ist das gleiche Kieferimplantat 1 wie in Fig. 1 von einer anderen Seite gezeigt. Im unteren Teil 3 dient eine in Richtung der Längsachse M verlaufende Abflußrinne 15 zum Ableiten von Wundsekret. Die in Form einer Nut ausgebildete Abflußrinne 15 erhöht gleichzeitig die Retentionsstabilität. Ein Zahnersatzträger 12, dessen Unterseite 20 der Oberseite 10 angepaßt ist, ist mit seinem Stift 19 in der Öffnung 18 des Oberteils 2 befestigt. Form von Öffnung 18 und Stift 19 im Querschnitt werden weiter unten zu Fig. 7 noch beschrieben.

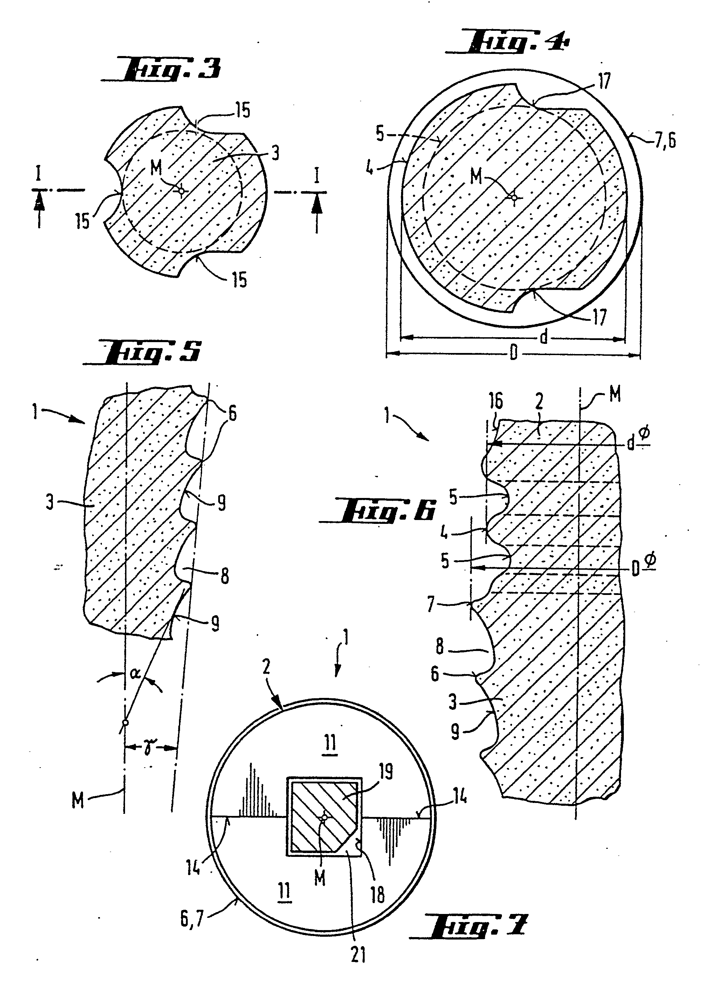

Die Fig. 3 zeigt einen Schnitt entlang der Linie III-III der Fig. 1 mit weiteren Rinnen 15.

In Fig. 4 sind Retentionen 17 dargestellt, die im Bereich des Ringwulstes 4 ausgebildet sind.

Fig. 5 zeigt in vergrößerter Darstellung den Bereich V der Fig. 2, wobei die sägezahnartigen Gewindegänge 8 so ausgebildet sind, daß die Flanken 9 der Gewindegänge mit der Mittelachse M des Kieferimplantates 1 einen in Richtung des Oberteils 2 geöffneten Winkel $\alpha$ von 30° bilden. Gewindespitzen 6 dienen der Aufhängung des Kieferimplantates 1 in den sich neu bildenden Faserbändern.

Fig. 6 zeigt in einer stark vergrößerten Darstellung einen Ausschnitt aus dem Bereich VI entsprechend der Fig. 2, wobei ringförmige Einkerbungen 5 unterhalb des mit der Hohlkehle 16 versehenen Oberteils 2 und oberhalb des unteren Teils 3 und ein Ringwulst 4 zwischen den ringförmigen Einkerbungen 5 angeordnet sind.

Die Fig. 7 zeigt die quadratische Querschnittsform der Öffnung 18 für den Stift 19 des Zahnträgers 12. Der Stift 19 hat fünfeckige Querschnittsform, die dadurch entsteht, indem von einer Quadratform ein Bereich in Dreiecksform abgeschnitten wird, wodurch ein Kanal 21 in Dreiecksquerschnittsform entsteht, welcher der Zuführung von Verbindungsmitteln dient.

**Patentansprüche**

1. Kieferimplantat (1) aus keramischem Werkstoff, das an seinem unteren, zur Verankerung im Kieferknochen vorgesehenen Teil (3) als konische, an ihrem Ende (13) abgerundete Schraube ausgebildet ist und an seinem Oberteil (2) eine Hohlkehle (16) zur Anlagerung der Epithelmanschette und eine Öffnung (18) zur Aufnahme eines Zahnträgers (12) aufweist und dadurch gekennzeichnet ist, daß unmittelbar an das Oberteil (2) und unmittelbar vor dem als konische Schraube ausgebildeten unteren Teil (3) des Kieferimplantats (1) zumindest ein Ringwulst (4) und zumindest zwei ringförmige Einkerbungen (5) anschließen, wobei der Durchmesser (d) des Ringwulstes (4) kleiner ist als der Durchmesser (D) der Gewindespitzen (6) beim obersten Gewindegang (7) des unteren Teiles (3).

2. Kieferimplantat nach Anspruch 1, dadurch gekennzeichnet, daß der untere Teil (3) des Kieferimplantates (1) Gänge (8) mit, Längsschnitt betrachtet, sägezahnartigem profil aufweist, deren Flanken (9) mit der Mittelachse (M) des Kieferimplantates (1) einen in Richtung des Oberteils (2) geöffneten Winkel $\alpha < 90°$ bilden.

3. Kieferimplantat nach einem der Ansprüche 1 und 2, dadurch gekennzeichnet, daß der Winkel $\alpha$ 20 bis 40° beträgt.

4. Kieferimplantat nach einem der Ansprüche 1 bis 3, dadurch gekennzeichnet, daß die Oberseite (10) des Oberteils (2) aus zwei halbkreisförmigen Flächen (11) besteht, die in einem Winkel $\beta$ von 13 bis 18° seitlich vom Kamm (14) der Oberseite (10) abfallen.

**Claims**

1. Maxillary implant (1) of ceramic material which, at its lower part (3) provided for anchoring in the jaw-bone, is constructed as a conical screw rounded at its end (13) and, at its upper part (2), has a hollow groove (16) for mounting the epithelial collar and an opening (18) for accommodating a tooth support (12) and which is characterised in that at least one annular bead (4) and at least two annular notches (5) are immediately adjacent the upper part (2) and immediately in front of the lower part (3), constructed as a conical screw, of the maxillary implant (1), the diameter ($\underline{d}$) of the annular bead (4) being smaller than the diameter ($\underline{D}$) of the screw crest (6) at the uppermost thread (7) of the lower part (3).

2. Maxillary implant according to claim 1, chäracterised in that the lower part (3) of the maxillary implant (1) has threads (8) having, considered in longitudinal cross-section, a sawtooth-like profile, the flanks (9) of which form with the central axis ($\underline{M}$) of the maxillary implant (1) an angle $\alpha < 90°$ open in the direction of the upper part (2).

3. Maxillary implant according to claim 1 or 2, characterised in that the angle $\alpha$ is from 20 to 40°.

4. Maxillary implant according to one of claims 1 to 3, characterised in that the upper side (10) of the upper part (2) comprises two semi-circular faces (11) which incline at an angle $\beta$ of from 13 to 18° laterally from the summit (14) of the upper side (10).

## Revendications

1. Implant maxillaire (1) en matériau céramique qui, au niveau de sa partie inférieure (3) prévue pour la fixation dans l'os maxillaire, est réalisé en forme de vis conique arrondie à son extrémité (13) et, au niveau de sa partie supérieure (2), comporte une gorge (16) pour l'incrustation de la manchette épithéliale et un orifice (18) pour recevoir une prothèse dentaire 12, et caractérisé par le fait que directement à la partie supérieure (2) et directement devant la partie inférieure (3),réalisée en forme de vis conique,de l'implant maxillaire (1),se rattache au moins un bourrelet annulaire (4) et au moins deux entailles annulaires (5), le diamètre (d) du bourrelet annulaire (4) étant plus petit que le diamètre (D)des sommets (6) du filet supérieur (7) de la partie inférieure (3).

2. Implant maxillaire selon la revendication 1, caractérisé par le fait que la partie inférieure (3) de l'implant (1) comporte des filets (8) à profil en dents de scie vus en coupe longitudinale, et dont les flancs (9) forment avec l'axe médian (M) de l'implant (1) un angle $\alpha < 90°$ ouvert en direction de la partie supérieure (2).

3. Implant maxillaire selon l'une des revendications 1 et 2, caractérisé par le fait que l'angle $\alpha$ est de 20 à 40°.

4. Implant maxillaire selon l'une des revendications 1 à 3, caractérisé par le fait que le dessus (10) de la partie supérieure (2) se compose de deux surfaces semicirculaires (11) qui vont en descendant sous un angle $\beta$ de 13 à 18° latéralement à partir de la crête (14) du dessus (10).

*Fig.1*

*Fig.2*

Fig. 3

Fig. 4

Fig. 5

Fig. 6

Fig. 7